# EUROPEAN PATENT APPLICATION

(11) **EP 3 072 427 A1**
(43) Date of publication of application: **28.09.2016**
(21) Application number: 15160733.0
(22) Date of filing: 25.03.2015
(51) Int. Cl.: A47J 31/46, A47J 31/60

(54) **BEVERAGE DISPENSER PREPARING HOT BEVERAGES**

(71) Applicant: Nestec S.A., 1800 Vevey (CH)
(72) Inventor: Girault, Olivier, 1800 VEVEY (CH); Reust, Alexis, 1010 LAUSANNE (CH); Brändle, Manuel, 9103 SCHWELLBRUNN (CH); Wirth, Patrick, 8404 WINTERTHUR (CH); Bächtold, Roman, 8577 SCHÖNHOLZERSWILEN (CH)
(74) Representative: Ducreux, Marie

(57) **Abstract**

The invention concerns a beverage dispenser preparing beverage with hot water comprising a hot water fluid system, said hot water fluid system comprising at least a water supply, a pump (3), a water heater (4) and at least one device (51, 51, 53) for preparing beverage from a beverage ingredient and hot water,
wherein the fluid system comprises :
- a bypass line (6) for having hot water from the heater bypass the at least one device (51, 52, 53) for preparing beverage,
- a water tank (1), said water tank being connected to the hot water fluid system so that :
. an outlet (12) of the water tank is connected to the upstream side of the pump (3) and the heater (4) of the hot water fluid system, and
. an inlet (12) of the water tank is connected to the downstream side of the bypass line (6) of the hot water fluid system,
the outlet and the inlet of water tank being designed so that the flow introduced through the inlet (11) is not directly captured by the outlet (12).

## Description

### Field of the invention

The present invention relates to beverage dispensers preparing hot beverages from a beverage ingredient and hot water.

### Background of the invention

Beverage dispensers preparing hot beverages are known from the prior art. These dispensers usually comprise a hot water production fluid system treating water and delivering hot water to a device configured for receiving hot water and having hot water contacting a beverage ingredient in order to prepare a beverage therefrom (mixing chamber, brewing chamber, cup). Generally the hot water production fluid system comprises at least a supply of water, a pump and a heater connected one to the other through pipes.

The heater is generally a pressurized boiler that is to say a water tank comprising a heating element and closed to the atmosphere. In this type of boiler, water heating generates air with the consequence that said air is carried with water downstream to the boiler. Consequently with time the content of air builds up in the hot water fluid system.

This mixture of hot water and air in the pipes affects the preparation of beverages because air alters the consistency of the quantity of hot water mixed with beverage ingredient. In fact the quantity of hot water delivered to the device configured for preparing a beverage (mixing or brewing chamber or cup) is controlled by the activation of the pump during a specific time. The pump is calibrated for pumping a fluid comprising only water. If air develops in the boiler and mixes with water, the pump does not deliver the expected quantity of water to the device for preparing a beverage. As a consequence the ratio of hot water and beverage ingredient introduced in the device for preparing a beverage is not as expected and the quality of the prepared beverage is affected. No consistent preparation is achieved.

An object of the present invention is to provide a beverage dispenser with a fluid system that enables the evacuation of air from the hot water fluid system of the beverage dispenser.

It would be advantageous to provide a beverage dispenser comprising a water tank that is removable from the dispenser.

### Summary of the invention

In a first aspect of the invention, there is provided a beverage dispenser preparing beverage with hot water comprising a hot water fluid system, said hot water fluid system comprising at least a water supply, a pump, a water heater and at least one device for preparing beverage from a beverage ingredient and hot water,
wherein the fluid system comprises :
- a bypass line for having hot water from the heater bypassing the at least one device for preparing beverage,
- a water tank, said water tank being connected to the hot water fluid system so that:
   - an outlet of the water tank is connected to the upstream side of the pump and the heater of the hot water fluid system, and
   - an inlet of the water tank is connected to the downstream side of the bypass line of the hot water fluid system,
      the outlet and the inlet of the water tank being designed so that the flow introduced through the inlet is not directly captured by the outlet.

The pump of the hot water fluid system is connected to the supply of water and to the upstream side of the water heater so as to deliver water to the water heater. Any type of pump can be used.

The supply of water can be the water tank. It can also be tap water generally supplied to the fluid system by a valve.

The water heater is preferably a low pressure heater boiler. Such a boiler usually comprises a tank not opened to atmosphere and comprising an inlet for introducing pumped water and an outlet for delivering pumped hot water. The boiler can comprise a heating element (a resistor) inside the tank or inside the walls of the tank so that water stored in the tank is heated.

The device for preparing beverage from a beverage ingredient and hot water can be comprised in the list of: a mixing bowl, a whipper bowl, a brewing chamber, a jet(s) head. The jet(s) head can be a nozzle delivering at least one jet of water. Preferably it delivers at least two jets of water and, even more preferably, the jets head is able to rotate during the delivery of water through the nozzle.

The mixing bowl can be a chamber configured to receive hot water and a soluble beverage ingredient. It can be designed so as to make an efficient contact of the beverage ingredient and hot water and improve the dissolution of soluble beverage ingredient. The whipper bowl usually comprises a first part which is a mixing chamber configured to receive hot water and a soluble food ingredient and a second part comprising a whipper configured to make the mixture of hot water and the food ingredient foam.

The brewing chamber can be a chamber configured to receive an infusable beverage ingredient and hot water. In the brewing process, hot water infuses and extracts flavours from the brewing ingredient. The brewing chamber can contain a filter to allow beverage to drain from the infused beverage ingredient and hot water mixture. It can be configured to be hermetically closed to receive and hold hot water under pressure and to retain the infusable beverage ingredient. The infusable beverage ingredient can be roast and ground coffee, tea leaves, herbs, botanicals, as well as other substances.

These different elements of the hot water fluid system are connected one to the other by means of pipes, usually according to the following order : water tank upstream the pump upstream the water heater upstream the device for preparing beverage.

The hot water fluid system comprises a bypass line for having hot water from the heater bypassing the at least one device for preparing beverage. Generally the fluid system comprises a valve for delivering pumped hot water either to the at least one device for preparing beverage or to the bypass line. Accordingly said valve is positioned downstream the water heater and upstream the at least one device for preparing beverage. If the dispenser comprises several devices for preparing beverage, the dispenser comprises several valves for having hot water bypassing each device for preparing beverage

As a consequence, depending on the activation of the valve, hot water can be dispensed to the device for preparing beverage or can bypass said device, specifically if hot water does not present properties for preparing a beverage as expected (in particular if hot water comprises a too high content of air).

The hot water fluid system comprises a water tank. This water tank is fed at least partly with water delivered by the bypass line of the hot water fluid system. Accordingly pumped hot water bypassing the device for preparing beverage is fed back to the water tank.

This water tank is connected through its water outlet to the upstream side of the pump and the heater so that water from the water tank is fed to these elements when pump is activated.

The outlet and the inlet of the water tank are designed so that flow introduced through the inlet is not directly captured by the outlet.

As a consequence, water introduced in the water tank through the water tank inlet, in particular water fed back to the water tank from the bypass line and potentially comprising air is not immediately sucked by the pump through the water outlet of the tank and reintroduced in the hot water fluid system. On the contrary water fed to the water tank is forced to enter into the internal volume of the tank, enabling air present in said hot water to rise up to the top of the water tank with the result that water becomes free from air. The water inlet is designed so that incoming water is forced to enter and stay in the tank so as to degas. In general it is preferred that the outlet of the water tank is positioned at a lower vertical position than the inlet of the water tank.

According to one embodiment the water tank can be configured so that the outlet and the inlet are positioned sufficiently far one from the other so that flow introduced through the inlet is not directly captured by the outlet. Yet this embodiment implies the presence of two openings in the water tank to establish communication with the hot water fluid system.

According to one mode the dispenser can be connected to an external source of water like tap water in order to supply the hot water fluid system with water. In that mode the tank is essentially used a degassing tank for the fluid system of the dispenser. Preferably the tank is removable from the dispenser for easy maintenance.

According to a second mode the water tank can be configured for being refilled with water manually. In that second mode, the water tank is preferably removable from the dispenser in order to facilitate the refilling operation. In that mode the dispenser can advantageously be placed in a local without connection to tap water, the water tank being regularly manually replenished and constituting the supply of water of the dispenser. The water tank guarantees the functions of supply of water and degassing of the fluid system.

According to the preferred embodiment, the water tank is connected to the hot water fluid system by means of a valve assembly, said valve assembly comprising :
- a body and a seat comprising an opening in a wall of the water tank,
- a stem movably positioned within the body and the seat and comprising one first end, said first end presenting a shape designed for cooperating with the seat, and one second end extending outside of the tank,
- a bonnet surrounding the stem outside of the tank,
wherein :
- the valve assembly comprises at least one first chamber between the external surface of the stem and the internal surface of the bonnet, said first chamber comprising at least one opening in the bonnet connected to the downstream side of the bypass line of the hot water fluid system,
- the stem comprises :
   - an internal cavity extending along the longitudinal axis of the stem, and
   - at least two holes between said internal cavity and the surface of the stem, one first hole creating an outlet port for the tank and said hole being positioned at the bottom of the cavity and being oriented downwardly, and one second hole communicating with the upstream side of the pump and the heater of the hot water fluid system,
- the first end of the stem and the seat being designed and positioned one relative to the other so that, when the valve is opened, a port is opened between the tank and the first chamber, said port being positioned above the stem.

The stem is movably positioned within the body and the seat in the wall of the tank in order to either close or open the water tank outlet and the water tank inlet. In the present specification, "the valve is closed" means that the valve closes the tank inlet and the tank outlet, more precisely the first end of the stem closes the water tank by cooperating with the seat.

Similarly, in the present specification, "the valve is opened" means that the first end of the stem does not cooperate with the seat, and the tank inlet and the tank outlet are opened.

The internal cavity of the stem and the two holes in said internal cavity establishes fluid communication from the water tank outlet to the pump and the heater.

The first end of the stem is designed for creating two ports when the valve is opened, that is when the stem is moved in translation in seat:
- the first port being an outlet port from the tank to the internal cavity of the stem,
- the second port being an inlet port from the first chamber to the tank.

Generally the valve assembly is positioned in a vertical lateral wall of the tank and preferably close to the bottom of the tank.

Accordingly there is less risk that the water level may pass under the valve assembly.

The valve assembly presents the advantage of requiring the presence of only one opening within the wall of the water tank. Accordingly the manufacturing of the tank is simpler.

Preferably the external surface of the stem and the internal surface of the bonnet are designed to define a second chamber separated from the first chamber, the first chamber being closer to the first end of the stem, and the second hole between the internal cavity within the stem and the surface of the stem opening in the second chamber only.

Accordingly the bonnet comprises :
- one first opening enabling the communication of the downstream side of the bypass line of the hot water fluid system with the first chamber, and
- one second opening enabling the communication of the second chamber with the upstream side of the pump and the heater of the hot water fluid system.

Preferably the second chamber between the external surface of the stem and the internal surface of the bonnet comprises two openings in the bonnet, the first opening being connected to the upstream side of the pump and the heater of the hot water fluid system and the second opening being connected to a supply of water different from the tank, like tap water.

Preferably the water tank is removable from the dispenser and the stem is spring loaded within the bonnet when the water tank is fixed inside the dispenser.

When the tank is removed from the dispenser, the stem is released from the bonnet and is not spring loaded any longer, accordingly the first end of the stem is urged against the seat and closes the tank opening. The water tank can be safely removed from the dispenser without leaking. Inversely when the water tank is fixed inside the dispenser, the port of the valve is opened automatically.

Preferably, in the valve assembly of the removable tank :
- the stem is made of two separable parts, the first part of the stem being configured for remaining attached to the water tank when the tank is removed from the dispenser and the second part being configured for remaining attached to the beverage dispenser when the tank is removed from the dispenser,
- the bonnet is made of two separable parts, the first part of the bonnet being configured for remaining attached to the water tank when the tank is removed from the dispenser and the second part being configured for remaining attached to the beverage dispenser when the tank is removed from the dispenser,
and the first part of the stem, respectively of the bonnet, is configured for cooperating with the second part of the stem, respectively of the bonnet.

The first and second parts of the stem cooperate so that when the tank is in the dispenser said parts form a water tight connection.

Similarly the first and second parts of the bonnet cooperate so that when the tank is in the dispenser said parts form a water tight connection.

Preferably the first part of the stem is spring loaded within the first part of the bonnet. Consequently the first part of the stem closes the inlet and outlet of the water tank when the tank is removed from the dispenser.

Preferably the second part of the stem is spring loaded within the second part of the bonnet. Consequently when the tank is removed from the dispenser, the second part of the stem is released from the second part of the bonnet : accordingly the second hole in the stem communicating with the upstream side of the pump and the heater of the hot water fluid system can be closed. The hot water fluid system remains closed.

According to the preferred embodiment, the tank is removable from the dispenser and the frame of the dispenser presents a housing in which the tank is able to slide.

The tank can comprises a handle and can be externally designed to form a drawer able to slide in lateral rails in the frame of the dispenser.

Preferably the housing in which the tank is able to slide is designed so as to form a lid on the water tank when the tank is fixed inside the dispenser. This lid does not close the water tank to atmosphere. Degassed air is free to escape from the water tank.

The removal of the water tank is particularly adapted for the situation where the dispenser cannot be connected to tap water.

Even if the dispenser if connected to tap water, the presence of this tank in the dispenser enables the degassing of water from the hot water fluid system. Since the tank is removable, it is easy to clean and repair during maintenance operations.

Generally the water tank is opened to atmosphere. Consequently air can escape therefrom.

Preferably in the beverage dispenser the at least one device for preparing beverage is a mixing bowl or a whipper bowl for mixing a soluble beverage ingredient with water.

Preferably the beverage dispenser comprises several devices for preparing beverage and several valves, each of said valve being dedicated to one of the devices for preparing beverage for delivering hot water either to the at least one device for preparing beverage or to the bypass line.

When the dispenser comprises several devices for preparing beverage and several valves, the valves are connected in series in the bypass line.

According to a second aspect there is provided a process for preparing a beverage with a dispenser such as described above, said process comprising the steps of:
- pumping water from the water tank,
- heating pumped water in the heater and
- delivering pumped hot water in at least one device for preparing beverage though the three way valve,
wherein the process comprises an air purging step before delivering water in at least one device for preparing beverage, said purging step being implemented before the step of delivering water in at least one device for preparing beverage and said purging step comprising the step of delivering pumped hot water to the water tank through the three way valve and the bypass line.

As a consequence water is purged and lines are purged.

Preferably the purging step is implemented when the dispenser is starting up or when the dispenser has not been used for preparing a beverage for a certain period.

In the present application the terms "bottom", "downwardly", "top", "above" are used to describe the relational positioning of features of the invention. These terms should be understood to refer to the water tank and its valve assembly in its normal orientation when positioned in a beverage dispenser as shown in the figures.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a perspective view of the internal part of a dispenser according to the present invention,
- Figure 2 illustrates the dispenser of Figure 1 from which the tank has been removed and set aside,
- Figure 3 is a schematic diagram of the hot water fluid system of a dispenser according to the present invention,
- Figures 4a and 4b are isolated views of the water tank and the valve assembly within the dispenser of Figures 1 and 2,
- Figures 5a and 5b are magnified views from the top and from the bottom respectively of the inlet and outlet of the water tank of Figure 4a,
- Figure 6 is a vertical cross section view of the valve assembly in Figure 4a according to plane AA.

### Detailed description of the drawings

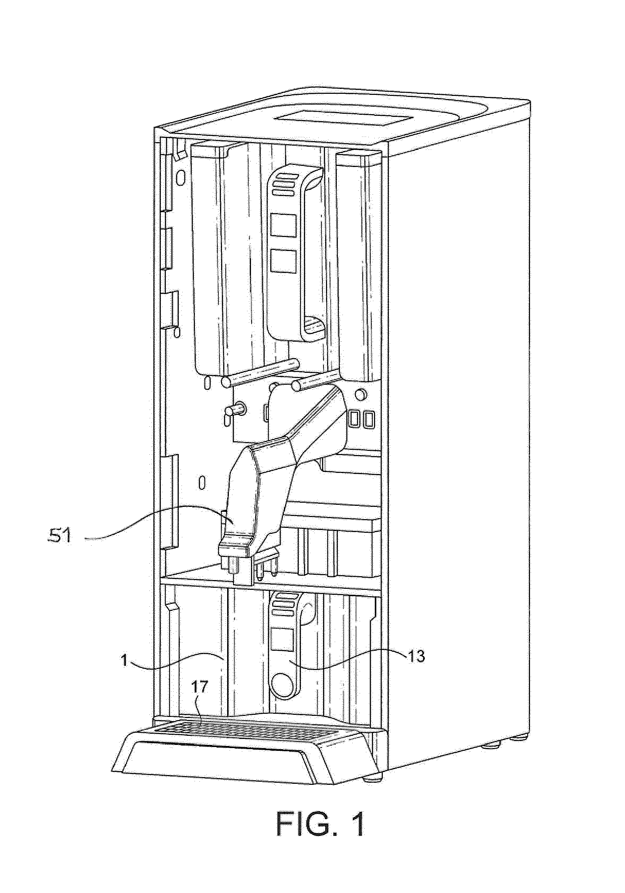

**Figure 1** illustrates a dispenser according to the present invention wherein the front door has been made transparent to make internal parts apparent.

This dispenser comprises a jets head 51 for delivering jets of hot water in a drinking cup positioned in a dispensing area like a drip tray 17 of the dispenser, the cup being pre-dosed with soluble beverage ingredient. In an alternative dispenser the soluble beverage ingredients can be stored in a tank positioned above the jets head. The tanks usually integrate a dosing device to dose and deliver the ingredient in the cup.

Hot water is supplied to the jets head by a fluid system comprising at least a boiler, a pump and a heater placed in the back part of the dispenser (not represented in Figure 1).

The dispenser comprises a water tank 1 at its bottom. The water tank is removable and presents a handle 13 that can be pulled by an operator,

The dispenser usually comprises an input device for enabling a customer to select and order a beverage on the front door (not represented).

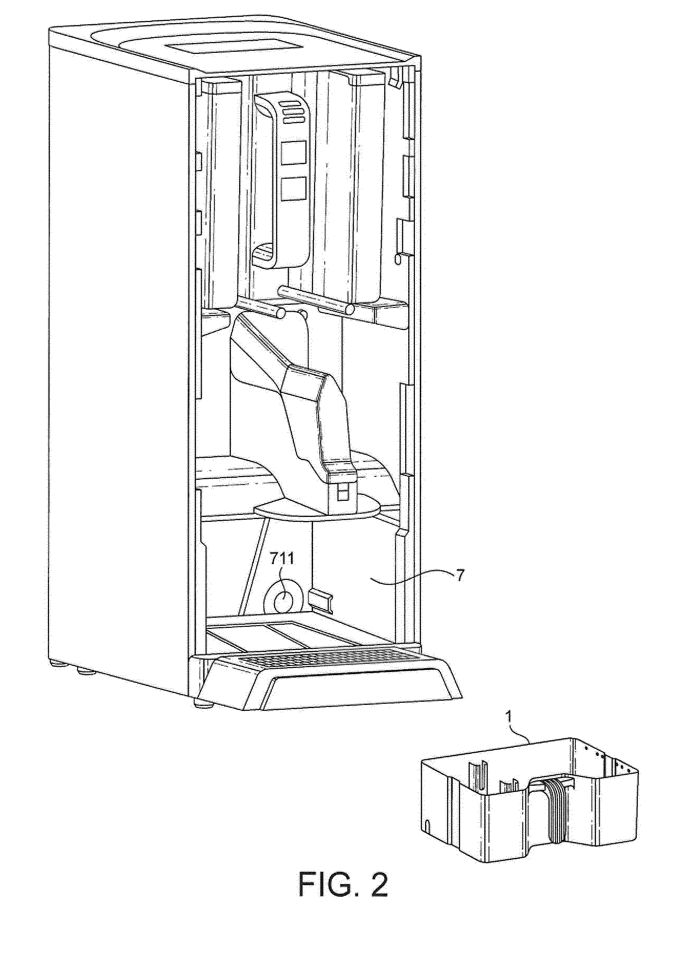

**Figure 2** illustrates the dispenser of Figure 1, the tank 1 being removed from the frame of the dispenser and being put aside. The top of the housing forms a lid above the tank 1 when the tank is positioned in the dispenser.

The dispenser presents an internal housing 7 for receiving the tank. The back wall of the housing presents an opening 711 enabling the connection of the tank with the hot water fluid system.

Preferably the back side of the water tank comprises a valve assembly enabling :
- the cooperation with the opening 711 and the connection to the hot water fluid system when the tank is inside the dispenser, and
- the closure of the water tank when it is removed from the dispenser in order to avoid water leaking.

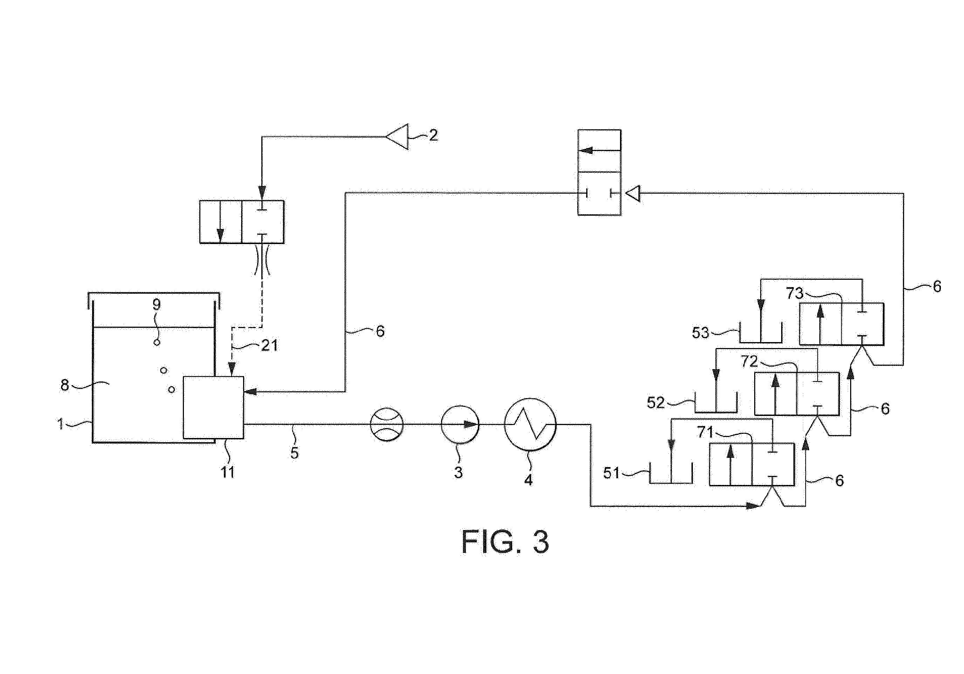

**Figure 3** is a schematic diagram of the hot water fluid system of a dispenser according to the present invention.

The system comprises a water tank 1. The outlet 12 of this tank is connected to a pump 3 delivering pumped water to a boiler 4 through an upstream line 5. This boiler 4 is a low pressure boiler. It comprises a tank for holding water and heating it. It remains closed to atmosphere. The heater is connected to a first valve 71 configured for delivering heated water to a first device 51 for preparing a beverage or for bypassing water in a bypass line 6. Downstream to the first valve 71, the bypass line 6 is connected to a second valve 72 configured for delivering heated water to a second device 52 for preparing a beverage or for bypassing water in the bypass line 6. Downstream to the second valve 72, the bypass line 6 is connected to a third valve 73 configured for delivering heated water to a second device 53 for preparing a beverage or for bypassing water in the bypass line 6.

The three devices 51, 52, 53 for preparing a beverage are usually configured for preparing different beverages. For this reason they can be differently configured (different whippers in case of whipper chambers, different concept modes for dissolution and brewing chambers) or they can be identical but configured for preparing one type of beverage only (only milk or only coffee for example) in order to avoid cross contamination within the device. In the dispenser illustrated in Figures 1 and 2, only one device 51 (the jets head) is present. Depending on the nature of the beverage ordered by the customer, the valve corresponding to the device dedicated to the preparation of said beverage is activated to enable the delivery of hot water in said device. For example, if said device is the second device 52, the first valve is activated to bypass the first device and the second valve is activated to deliver hot water to the second device. Downstream to the last device the bypass line 6 is connected to a water inlet 10 of the water tank.

Finally the system comprises a water supply 2 that is usually a connection to tap water. The water supply is connected through a water line 21 and a valve to the fluid system. Due to the presence of said water line 21 and the removable water tank 1, the dispenser can be either connected to tap water or fed with water from the water tank only.

During operation of the dispenser and in particular during heating of water in the heater, air is generated and carried with hot water within the lines of the fluid system. If the dispenser has not dispensed beverage for a certain period the quantity of air in the lines may be such that when a beverage is prepared the volume of hot water is not correct. Indeed, since the dose of hot water is generally based on the time of actuation of the pump 3 or on the time of opening of the valve 71, 72 or 73 based on the condition that the line comprises water only, the amount of water effectively delivered is lower than expected.

The bypass line 6 enables the diversion of the mixture of hot water and air from the devices 71, 72, 73 for preparing beverage until the content of water in the lines is stabilised and contains water only.

Water comprising air is fed back to the water tank 10 wherein air bubbles 9 can separate from water 8. Water devoid of air is sucked by the pump 3 again through the water tank outlet 12. The inlet 10 and the outlet 12 are designed and positioned one to the other in order to avoid that air bubbles 9 are sucked by the pump 3 again.

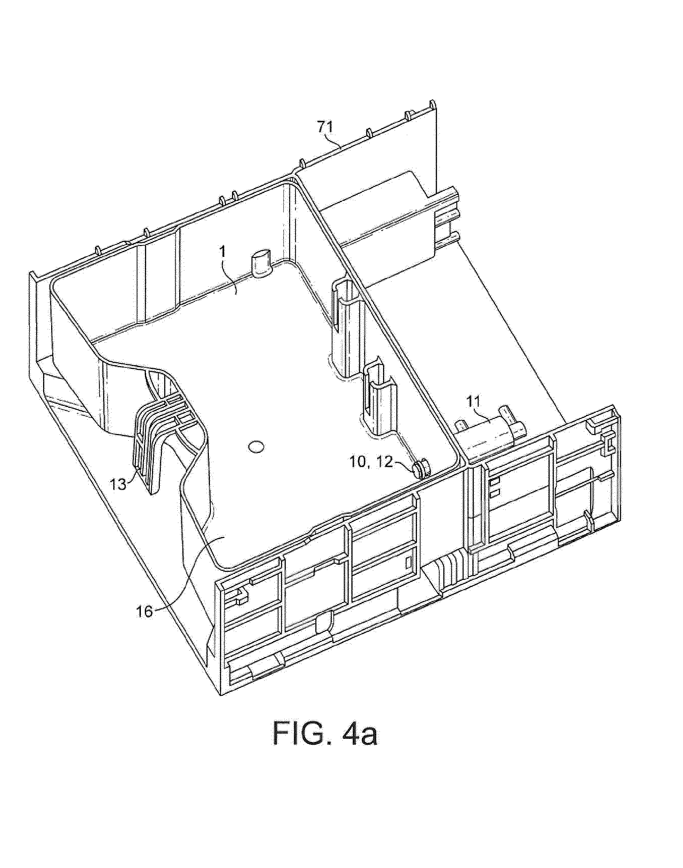

**Figure 4a** is an isolated view of a part of the dispenser showing the water tank 1 within the internal housing 71 of the dispenser viewed from the top. The tank is connected to the hot water fluid system by an inlet 10 and an outlet 12. The inlet and the outlet are positioned close to the bottom 16 of the tank.

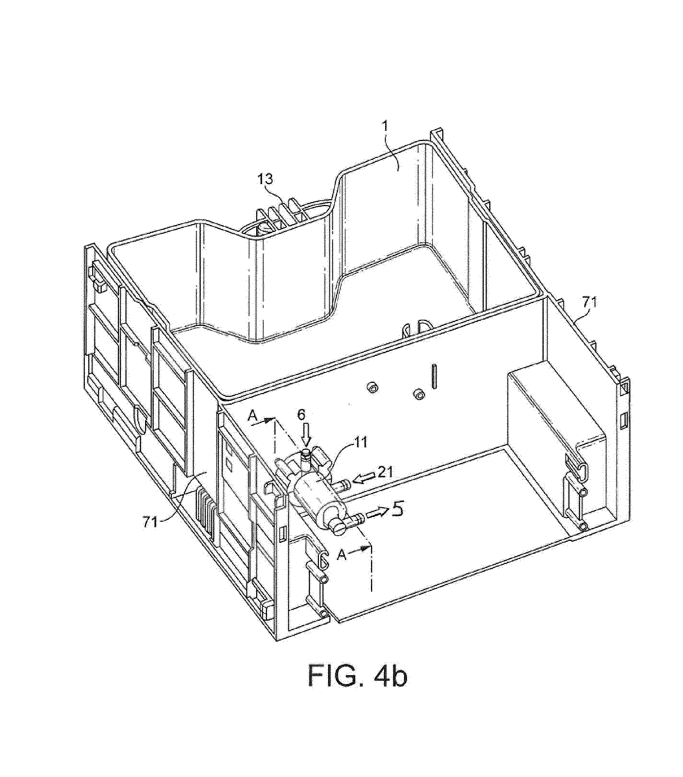

**Figure 4b** is a back side view of the elements illustrated in Figure 4a. Arrows illustrate the connections of the valve assembly 11 with the different lines of the fluid system that are :
- line 5 to the pump and the heater,
- downstream of the bypass line 6,
- line 21 from the water supply.

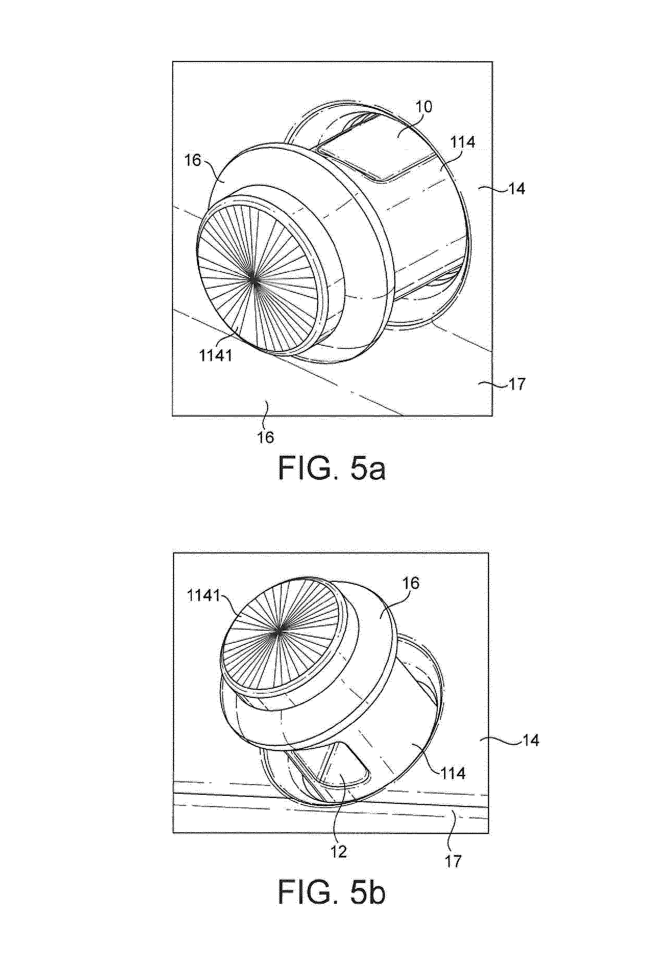

**Figure 5a** is a perspective magnified view from the top of the outlet and the inlet of the water tank of Figure 4a. The outlet and the inlet are positioned in the lateral wall 14 of the tank and close the bottom wall 16. Both walls 14, 16 are joined together through a round corner 17. The lateral wall comprises a hole in which is positioned the stem 114 of a valve assembly. The water inlet 10 of the tank is positioned above the stem 114.

**Figure 5b** is a perspective magnified view from the bottom of the outlet and the inlet of the water tank of Figure 4a. The stem 114 comprises a hole at its bottom corresponding to the water outlet 12 of the tank. A ring 16 guarantees liquid tightness when the inlet and outlet are closed by urging the stem 114 against the lateral wall 14.

Due to the fact that the water inlet 10 is above the stem 114, air comprised in water coming in through the inlet 10 automatically flows upward in the water tank. Moreover since the water outlet 10 faces the bottom of the tank, the sucking of water from said water outlet does not capture water and bubbles on the upper side of the stem 114.

Water flowing in the water tank can be degassed before being sucked again in the hot water fluid system.

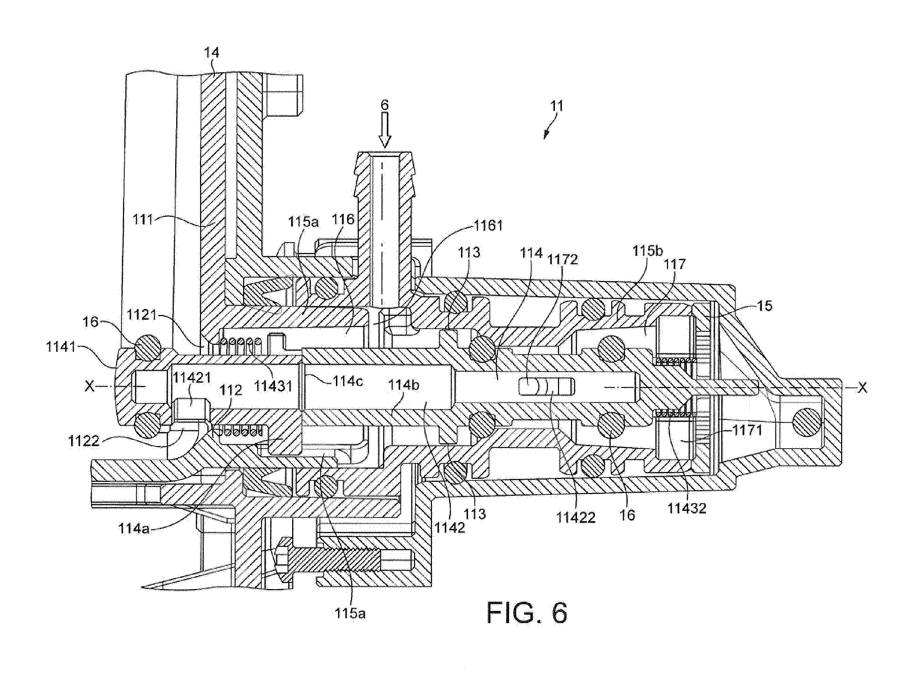

**Figure 6** is a vertical cross section view of the valve assembly of Figure 4b according to plane AA.

The valve assembly 11 is positioned in an opening in a wall 14 of the water tank, preferably in the back wall of the water tank. The valve assembly 11 is configured for closing this opening when the water tank is removed from the dispenser. Simultaneously the valve assembly 11 defines the water inlet and the water outlet of the tank and their connection to the hot water fluid system of the dispenser.

The opening in the wall 14 of the water tank forms the body 111 and the seat 112 of the valve.

The valve assembly comprises a stem 114 positioned within the body and the seat and movable within the body and the seat in translation along its longitudinal axis XX. The stem comprises one first end 1141 said first end presenting a shape designed for cooperating with the seat 112 in order to make the valve close the tank when said first end is moved to touch the seat 112 and to close the ports 1121, 1122.

The second end of the stem 114 extends outside of the tank 1.

The valve assembly comprises a bonnet 115 surrounding the stem 114 outside of the tank. The external surface of the stem and the internal surface of the bonnet cooperate together at a point of contact 113 defining one first chamber 116 on one side of the point of contact and one second chamber 117 on the other side of the point of contact.

This first chamber comprises a hole 1161 in the encasing 115 connected to the downstream side of the bypass line 6 of the hot water fluid system. Accordingly hot water fed back by the bypass line 6 is introduced in the water tank through said hole 1161 and then through the port 1121.

Preferably the first end 1141 of the stem and the seat 112 are designed and/or positioned one relative to the other so that, when the first end of the stem does not lean on the seat, a port is opened between the tank and the first chamber 116, said port being positioned above the stem.

The stem 114 comprises an internal cavity 1142 extending along the longitudinal axis XX of the stem. This internal cavity presents two holes 11421, 11422 establishing a communication between this cavity and the surface of the stem.

The first hole 11421 is positioned close to the first end 1141 of the stem and creates an outlet port 1122 for the tank when this first end 1141 does not lean on the seat 112, that is to say when the valve is opened. This first hole 11421 is positioned at the bottom of the cavity and is oriented downwardly. The second hole 11422 of the internal cavity is closer to the second end of the stem and communicates with the second chamber 117 between the stem and the bonnet. The second chamber 117 comprises two openings in the bonnet.

The first opening 1171 is connected to the upstream side of the pump 3 and the heater 4 of the hot water fluid system. Consequently the cavity 1142 in the plunger stem enables the connection of the water tank, through the first hole 11421, to the upstream side of the pump 3 and the heater 4 of the hot water fluid system, though the second chamber 117 and the first opening 1171. Since the first hole 11421 is positioned at the bottom of the cavity and is oriented downwardly, the valve enables the pump 3 to suck water near from the bottom of the tank where the presence of air and bubbles is improbable. The risk of building up air in the fluid system is reduced.

The second opening 1172 in the bonnet is connected to the water line from the water supply. Consequently the bonnet 115 enables the supply of fresh water from the supply of water 2 to the pump 3 and the heater 4 of the hot water fluid system through line 21, second opening 1172, second chamber 117 and first opening 1171. A filter 15 can be positioned downstream to the first opening 1171 to filter water before it enters in the hot water fluid system.

The stem 114 is made of two separable parts 114a, 114b divided along a partition line 114c. The bonnet 115 is made of two separable parts 115a, 115b. The first part 115a is a transversal cylindrical extension of the wall 14 of the tank. The second part 115b extends around the second part of the stem 114b and integrates the connection to the bypass line 6 and the water line 2. The end of the second part 115b slides around the end of the first part 115a in a watertight cooperation. - the bonnet 6 is made of two separable parts, the first part 6a of the bonnet 114 being configured for remaining attached to the water tank when the tank is removed from the dispenser and the second part 6b being configured for remaining attached to the beverage dispenser when the tank is removed from the dispenser,

The first part 114a of the stem is spring loaded by a spring 11431 so that when the water tank 1 is removed from the dispenser, the first end 1141 of the stem is urged against the seat 112 and closes the ports 31, 32. A seal 16 can improve tightness once the tank is closed.

The second part 114b of the stem is spring loaded by a spring 11432 so that when the water tank 1 is removed from the dispenser, the second part 114b of the stem is displaced in direction of the tank. Due to the presence of a seal 16 around the second part of the stem 114b, the second internal chamber 117 does not communicate with the second hole 11422 in the cavity and with the water line 2 : the hot water fluid system is closed and cannot leak. Moreover the valve 22 keeps the water line 21 closed if the water tank is removed.

The beverage dispenser of the present invention presents the advantage of enabling the degassing of hot water before the preparation of beverages and consequently guaranteeing the consistent preparation of beverages.

Another advantage of the dispenser is that once hot water has been degassed, water can be used again in the preparation of beverage and spilling of water is avoided.

Another advantage of the dispenser is that the dispenser can be used either connected to tap water or not, the water tank enabling the water refilling of the dispenser.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| tank | 1 |
| inlet | 10 |
| outlet | 12 |
| valve assembly | 11 |
| body | 111 |
| seat | 112 |
| ports | 1121, 1122 |
| point of contact | 113 |
| stem | 114 |
| first end | 1141 |
| internal cavity | 1142 |
| hole | 11421, 11422 |
| spring | 11431, 11432 |
| first part | 114a |
| second part | 114b |
| partition line | 114c |
| bonnet | 115 |
| first part | 115a |
| second part | 115b |
| first chamber | 116 |
| opening | 1161 |
| second chamber | 117 |
| opening | 1171, 1172 |
| supply of water | 2 |
| line from water supply | 21 |
| pump | 3 |
| heater | 4 |
| line to pump and heater | 5 |
| device for preparing beverage | 51, 52, 53 |
| bypass line | 6 |
| internal housing | 7 |
| opening | 711 |
| valves | 71, 72, 73 |
| water | 8 |
| air bubbles | 9 |
| handle | 13 |
| tank lateral wall | 14 |
| filter | 15 |
| tank bottom wall | 16 |
| drip tray | 17 |

## Claims

1. Beverage dispenser preparing beverage with hot water comprising a hot water fluid system, said hot water fluid system comprising at least a water supply, a pump (3), a water heater (4) and at least one device (51, 51, 53) for preparing beverage from a beverage ingredient and hot water,
wherein the fluid system comprises :
- a bypass line (6) for having hot water from the heater bypass the at least one device (51, 52, 53) for preparing beverage,
- a water tank (1), said water tank being connected to the hot water fluid system so that:
. an outlet (12) of the water tank is connected to the upstream side of the pump (3) and the heater (4) of the hot water fluid system, and
. an inlet (12) of the water tank is connected to the downstream side of the bypass line (6) of the hot water fluid system,
the outlet and the inlet of the water tank being designed so that the flow introduced through the inlet (11) is not directly captured by the outlet (12).

2. Beverage dispenser according to Claim 1 wherein the water tank (1) is connected to the hot water fluid system by means of a valve assembly (11), said valve assembly comprising :
- a body (111) and a seat (112) comprising an opening in a wall (14) of the tank,
- a stem (114) movably positioned within the body and the seat and comprising one first end (1141), said first end presenting a shape designed for cooperating with the seat (112) and one second end extending outside of the tank
- a bonnet (115) surrounding the stem (114) outside of the tank,
wherein :
- the valve assembly comprises at least one first chamber (116) between the external surface of the stem and the internal surface of the bonnet, said first chamber comprising an opening (1161) in the bonnet connected to the downstream side of the bypass line (6) of the hot water fluid system,
- the stem (114) comprises :
. an internal cavity (1142) extending along the longitudinal axis of the stem, and
. at least two holes (11421, 11422) between said internal cavity and the surface of the stem, one first hole (11421) creating an outlet port for the tank and said hole being positioned at the bottom of the cavity and being oriented downwardly, and one second hole (11422) communicating with the upstream side of the pump and the heater of the hot water fluid system,
- the first end (1141) of the stem and the seat (112) being designed and being positioned one relative to the other so that, when the valve is opened, a port is opened between the tank (1) and the first chamber (116), said port being positioned above the stem.

3. Beverage dispenser according to Claim 2 wherein the external surface of the stem and the internal surface of the bonnet are designed to define a second chamber (117) separated from the first chamber (116), the first chamber being closer to the first end (1141) of the stem, and the second hole (11422) between the cavity and the surface of the stem opening in the second chamber (117) only.

4. Beverage dispenser according to the precedent claim wherein the second chamber (117) comprises two openings in the bonnet, the first opening (1171) being connected to the upstream side of the pump (3) and the heater (4) of the hot water fluid system and the second opening (1172) being connected to a supply of water (2).

5. Beverage dispenser according to any one of Claims 2 to 4 wherein the water tank is removable from the dispenser and the stem (114) is spring loaded within the bonnet (115).

6. Beverage dispenser according to the precedent claim wherein :
- the stem (114) is made of two separable parts, the first part of the stem (114a) being configured for remaining attached to the water tank when the tank is removed from the dispenser and the second part (114b) being configured for remaining attached to the beverage dispenser when the tank is removed from the dispenser,
- the bonnet (115) is made of two separable parts, the first part (115a) of the bonnet being configured for remaining attached to the water tank when the tank is removed from the dispenser and the second part (115b) being configured for remaining attached to the beverage dispenser when the tank is removed from the dispenser,
and the first parts (114a, 6a) being configured for cooperating with the second parts (114b, 6b)

7. Beverage dispenser according to the precedent claim wherein the first part of the stem (114a) is spring loaded within the first part of the bonnet (6a).

8. Beverage dispenser according Claim 6 or 7 wherein the second part of the stem (114b) is spring loaded within the second part (6b) of the bonnet.

9. Beverage dispenser according to any one of the precedent claims wherein the tank (1) is removable from the dispenser and the frame (7) of the dispenser presents a housing in which the tank is able to slide.

10. Beverage dispenser according to any one of the precedent claims wherein the water tank (1) is opened to atmosphere (to enable air to escape).

11. Beverage dispenser according to any one of the precedent claims wherein the at least one device (51, 52, 53) for preparing beverage is a mixing chamber for mixing a soluble beverage ingredient with water.

12. Process for preparing a beverage with a dispenser according to any one of Claims 1 to 11 comprising the steps of :
- pumping water from the water tank,
- heating pumped water in the heater and
- delivering pumped hot water in at least one device for preparing beverage though the three way valve,
wherein the process comprises a air purging step before delivering water in at least one device for preparing beverage, said purging step being implemented before the step of delivering water in at least one device for preparing beverage and said purging step comprising the step of delivering pumped hot water to the water tank through the three way valve and the bypass line.
